# EUROPEAN PATENT APPLICATION

(11) **EP 1 327 602 A1**
(43) Date of publication of application: **16.07.2003**
(21) Application number: 01945683.9
(22) Date of filing: 28.06.2001
(51) Int. Cl.: B66F 9/075, B62D 7/14

(54) **WORKING VEHICLE WITH TRANSVERSE TRAVEL SYSTEM**

(30) Priority: 01.08.2000 JP 2000232534
(71) Applicant: TCM Corporation, Nishi-ku, Osaka-shi, Osaka 550-0003 (JP)
(72) Inventor: KOUYAMA, Yoshiyuki, c/o TCM CORPORATION, Osaka-shi, Osaka 550-0003 (JP)
(74) Representative: Kupecz, Arpad
(86) International application number: JP0105599
(87) International publication number: WO02010058

(57) **Abstract**

A vehicle body (2) is provided with front wheels (3) installed to be turnable around vertical axes (27), front wheel turning means (30) for turning the front wheels, rear wheels (4) installed to be turnable around vertical axes (49), and rear wheels turning means (50) for turning the rear wheels. The vertical axes (27, 49) of the front and rear wheels (3, 4) are positioned outwardly of tread centers (3a, 4a) for longitudinal travel, so that on switching to transverse travel, the front wheels (3) can be turned laterally and forwardly and the rear wheels (4) can be turned laterally and rearwardly with respect to the vehicle body (2). This enables the center distances between the right and left wheels and between the front and rear wheels to be greater than those for longitudinal travel, thus improving stability for transverse travel.

## Description

### TECHNICAL FIELD

The present invention relates to a working vehicle with a transverse travel system, which can be switched to transverse travel.

### BACKGROUND OF THE INVENTION

Heretofore, a vehicle with a transverse travel system has been found in trucks, some loaders, etc., and in forklifts it is present in reach type electric vehicles. Further, there is a side forklift having a mast and a fork attached thereto transversely of vehicle movement to handle long-sized loads. And recently, there has been provided a counter type forklift that is capable of transverse travel in addition to usual work, having functions similar to those of the side fork. In order to establish such forklift, the front wheels (driving wheels) or rear wheels (steering wheels) are steered to turn exactly sideways around a vertical axis.

In the above arrangement, however, since the transverse travel with the front and rear wheels turned exactly sideways is effected in the direction of the width that is narrow, the transverse travel becomes unstable unless effected while grasping road conditions or the like.

### SUMMARY OF THE INVENTION

Accordingly, an object of the invention is to provide a working vehicle with a transverse travel system that allows turning for normal travel and transverse travel and allows transverse travel to be effected more stably.

A working vehicle with a transverse travel system according to the invention comprises a vehicle body provided with a pair of right and left front wheels and a pair of right and left rear wheels, each pair being turnable through 90 degrees, the pair of right and left front wheels being turnable around vertical axes with respect to the vehicle body and being provided with a front wheel turning means for turning movement, the pair of right and left rear wheels being turnable around vertical axes with respect to the vehicle body and being provided with a rear wheel turning means for turning movement, the vertical axes for the front and rear wheels being positioned outside a tread center of each wheel associated with a longitudinal travel position of each wheel.

According to the above arrangement, during normal travel, the right and left front wheels and the right and left rear wheels are longitudinally directed. During normal travel, the rear wheel turning means is actuated as by the turning angle of the steering wheel so as to turn the rear wheels in the same direction and through a required angle, thereby allowing the rightward and leftward turning travel. Further, by actuating the rear wheel turning means to turn the right and left rear wheels obliquely until their outer edges face somewhat forward, the on-the-spot turning travel is allowed.

Switching from normal travel to transverse travel is effected by operating a transverse travel mode switch that is, for example, of the lever type so as to actuate the front wheel turning means and the rear wheel turning means. That is, the front wheel turning means is actuated to turn the front wheels around a vertical axis until they turn through 90 degrees (exactly sideways) with respect to the vehicle body. Further, the rear wheel turning means is actuated to turn the rear wheels around a vertical axis until they turn through 90 degrees (exactly sideways) with respect to the vehicle body. This allows the right and left transverse travel of the working vehicle.

In this case, the vertical axes are positioned outside the tread center of the front and rear wheels during longitudinal travel, and this results in the two front wheels swinging out transversely (in the direction of the vehicle width and in the transverse travel direction) and forwardly (the direction of the length of the vehicle) with respect to the vehicle body, and the two rear wheels can be swung out transversely and rearwardly with respect to the vehicle body. This allows the transverse wheel center distance between the two front wheels or the two rear wheels to be longer than the transverse wheel center distance for the longitudinal travel, and also allows the longitudinal wheel center distance between the front and rear wheels to be longer than the transverse wheel center distance for the longitudinal travel; thus, the stability can be improved. Therefore, the transverse travel of the working vehicle can be effected more stably.

### BRIEF DESCRIPTION OF THE DRAWINGS

FIG. 1 is a side view of a working vehicle with a transverse travel system according to a first embodiment of the present invention;
FIG. 2 is a partly broken away front view of a front wheel region of the working vehicle with a transverse travel system;
FIG. 3 is partly broken away front view of a rear wheel region of the working vehicle with a transverse travel system;
FIG. 4 is a schematic plan view of the working vehicle with a transverse travel system during normal travel;
FIG. 5 is a schematic plan view of the working vehicle with a transverse travel system during transverse travel;
FIG. 6 is a view explaining an operation of the rear wheel region of the working vehicle with a transverse travel system, (a) during turning, (b) during on-the-spot turning;
FIG. 7 is a schematic plan view of a working vehicle with a transverse travel system during normal travel according to a second embodiment of the present invention; and
FIG. 8 is a schematic plan view of the working vehicle with a transverse travel system during transverse travel.

### DESCRIPTION OF THE PREFERRED EMBODIMENTS

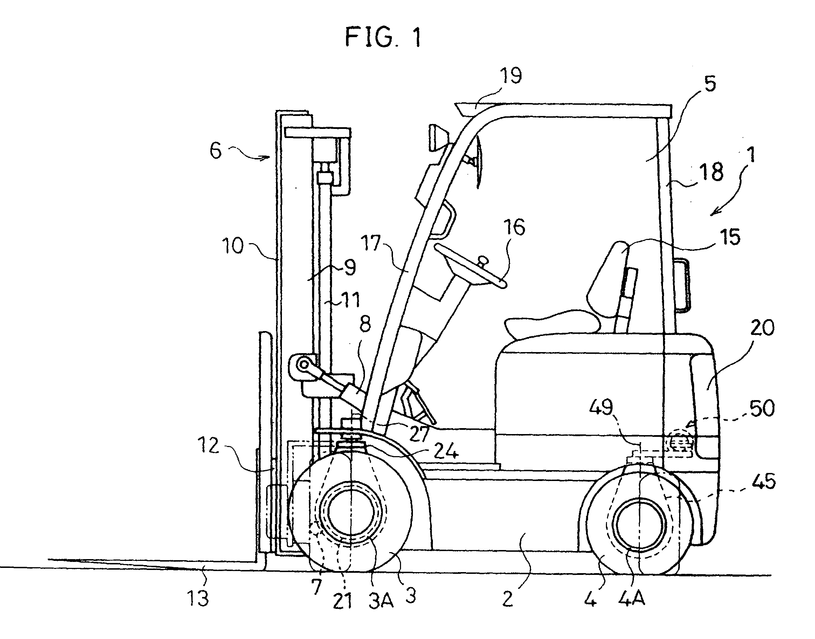

A first embodiment of the invention employed as a normal forklift will now be described with reference to FIGS. 1 through 6.

A forklift (an example of a working vehicle) 1 with a transverse travel system comprises a pair of right and left front wheels (driving wheels) 3 disposed in the front of the vehicle body 2, a pair of right and left rear wheels (steering wheels)4 disposed in the rear, and a driver's cabin 5 disposed above the front of the vehicle body 2. A vertically extensible mast 6 is longitudinally turnably attached to the front end of the vehicle body 2 through a connecting shaft 7 extending widthwise of the vehicle, and a tilt cylinder 8 for longitudinal turning is disposed between the vehicle body 2 and the mast 6.

The mast 6 comprises a pair of right and left outer frames 9 on the vehicle body 2 side, a pair of right and left inner frames 10 capable of lifting and lowering as guided by the outer frames 9, with a lift cylinder 11 disposed between the outer frames and inner frames 9 and 10. Also disposed is a lift bracket 12 capable of lifting and lowering as guided by the inner frames 10, said lift bracket 12 being provided with a pair of right and left forks 13 through a pair of upper and lower finger bars.

The driver's cabin 5 has a seat 15, a steering wheel 16 positioned forwardly of the seat 15, etc., and a head guard 19 is installed in an upper region through a front pipe 17 and rear pipe 18 erected from the main body 2. Further, a counterweight 20 is disposed rearwardly of the seat 15 and above the main body 2.

The pair of right and left front wheels 3 and pair of right and left rear wheels 4 are respectively turnable through 90 degrees (exactly sideways) with respect to the vehicle body 2. That is, the pair of right and left front wheels 3 have their rims 3A directly connected to the turning flanges (driving shafts) 22 of their respective electric motors (an example of a travel drive means) 21 through fasteners 23, whereby they are operatively connected to the electric motors 21.

And the mount of each electric motor 21 is transversely attached to the vertical plate portion of an inverted L-shaped revolving member 24, and the transverse plate portion of the revolving member 24 is attached to the vehicle body 2 through bearings 25 and a vertical shaft 26 for turning around a vertical axis 27. In this case, it is arranged that the vertical axis 27 is positioned outside the tread center 3a of the front wheel 3, for example, positioned on the outer side surface of the front wheel 3 during forward or backward travel.

A front wheel turning means 30 is installed for turning the electric motors 21, that is, the revolving members 24. This front wheel turning means 30 has a front wheel transverse travel cylinder 31 having its main body 31a swingably attached to the vehicle body 2 through a vertical pin 32, and a piston rod 31b is relatively turnably connected to a link 33 fixed to the revolving member 24 on one side, through a vertical connecting pin 34. And arms 35 connected to the right and left vertical shafts 26 are relatively turnably connected together by a link body 36 and connecting pins 37.

Therefore, turning the revolving members 24 through the link 33 by actuation of the front wheel transverse travel cylinder 31 causes the front wheel 3 on one side to turn exactly sideways around the vertical axis 27 and the front wheel 3 on the other side to turn exactly sideways around the vertical axis 27 through the arms 35 and link bodies 36. That is, according to the front wheel turning means 30, actuation of the common front wheel transverse travel cylinder 31 causes the right and left front wheels 3 to turn in mutually opposite directions to face exactly sideways. The above elements 31 through 37 integrally constitute an example of the front wheel turning means 30.

The pair of right and left rear wheels 4 have their rims 4A freely turnably attached to the vertical plate portions of their revolving members 45 through transverse axles 46. Further, the transverse plate portion of each revolving member 45 is turnable around a vertical axis 49 with respect to the vehicle body 2 through a bearing 47 and a vertical shaft 48. In this case, it is arranged that the vertical axis 49 is positioned outside the tread center 4a of the rear wheel 4 during forward or backward travel, for example, positioned on the outer side surface of the rear wheel 4.

A rear wheel turning means 50 is installed for turning the pair of right and left rear wheels 4 around the vertical axes 49, said rear wheel turning means 50 having rear wheel transverse travel cylinders 51 corresponding to both rear wheels 4. That is, the rear wheel transverse travel cylinders 51 have transversely extending main bodies 51a, the pair being linear and fixed to the vehicle body 2, and their piston rods 51b project widthwise of the vehicle to the opposite sides. And the arm body 52 connected to said vertical shaft 48 is relatively turnably connected to the projecting end of the piston rod 51b through the link 53 and vertical connecting pins 54 and 55.

It is arranged that one rear wheel transverse travel cylinder 51 is actuated to the right and left by the operation of an orbit roll (all hydraulic type power steering system) 57 controlled by turning the steering wheel 16 or by the operation of a semi-integral type power steering system (not shown). Further, it is arranged that the other rear wheel transverse travel cylinder 51 is moved right and left by the operation of an electrically controlled valve 58.

That is, in a state in which when both rear wheel transverse travel cylinders 51 are in intermediate operation, the right and left rear wheels 4 are longitudinally directed, one rear wheel transverse travel cylinder 51 is extended according to the turning angle of the steering wheel 16; thus, the vertical shaft 48 can be turned through the link 53 and arm body 52, to turn one rear wheel 4 exactly sideways around the vertical axis 49 through the revolving member 45. Further, the valve 58 is operated by electric control to extend the other rear wheel transverse travel cylinder 51; thus, the vertical shaft 48 can be turned through the link 53 and arm body 52, to turn the other rear wheel 4 exactly sideways around the vertical axis 49 through the revolving member 45.

In other words, it is arranged that the operation of the individual rear wheel transverse travel cylinders 51 separately turns the right and left rear wheels 4 in mutually opposite directions to face them exactly sideways. The elements 51 through 58 constitute an example of the rear wheel turning means 50 for turning the pair of right and left rear wheels 4 around the vertical axes 49.

A battery 60 is mounted on the vehicle body.2 and has a controller 61 attached thereto. And, cables 62 from the controller 61 are connected to said individual electric motors 21.

The operation of the first embodiment described above will now be described.

The solid lines in FIGS. 1 through 3, and FIG. 4 show straight travel during normal operation. At this time, the right and left front wheels 3 and the right and left rear wheels 4 are longitudinally directed. After being controlled by a controller 61, such forklift 1 is capable of driving the front wheels 3 forwardly and backwardly by feeding electric power from a battery 60 to the electric motors 21 through cables 62. Therefore, it is possible for the operator sitting on the seat 15 in the driver's cabin 5 to move the forklift 1 longitudinally by manipulating the steering wheel 16.

And actuating the lift cylinder 11 by operating the lift lever makes it possible to cause the forks 13 to move up and down along the mast 6, through the lift bracket 12; thus, the intended fork operation can be performed. Further, actuating the tilt cylinder 8 by operating the tilt lever makes it possible to cause the mast 6 to turn (tilt) around the axis of the connecting shaft 7; thus, the attitude of the forks 13 can be changed through the lift bracket 12.

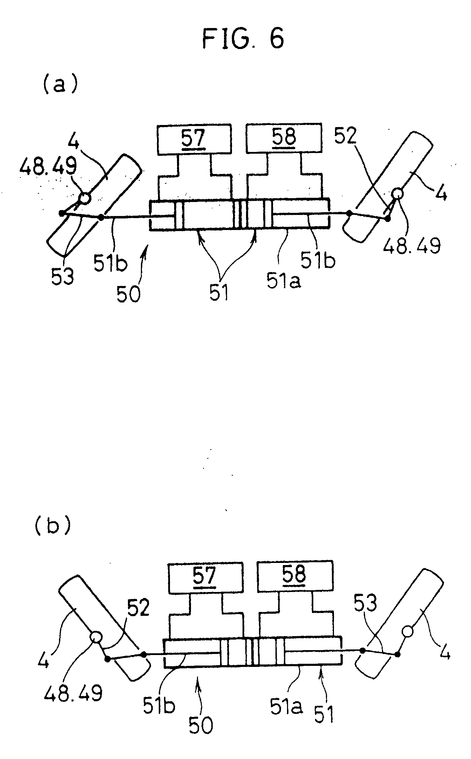

During the movement described above, the direction can be changed according to the turning angle of the steering wheel 16. That is, turning the steering wheel 16 to the left, for example, causes one rear wheel transverse travel cylinder 51 to extend halfway by the orbit roll 57 according to the turning angle, as shown in (a) of FIG. 6. At this time, the turning angle of the steering wheel 16 is detected as by a sensor so as to electrically control the valve 58 on the basis of the detection signal (feedback instruction), thereby causing the other rear wheel transverse travel cylinder 51 to contract halfway.

Such extension of one piston rod 51b and contraction of the other piston rod 51b are respectively transmitted to the arm bodies 52 through the links 53; thus, both revolving members 45 are turned in the same direction (to the right) around the vertical axes 49, thereby turning both rear wheels 4 to the right by a necessary angle. This makes it possible for the forklift 1 to turn to the left.

Further, as shown in (b) of FIG. 6, when both rear wheel transverse travel cylinders 51 are contracted halfway, both revolving members 45 are turned around the vertical axes 49 in mutually opposite directions, whereby both rear wheels 4 can be obliquely turned so that their outer edges are somewhat forward. In such state, driving both front wheels 3 for rotation in mutually opposite directions makes on-the-spot revolving possible.

When the normal travel described above is to be switched to transverse travel, for example, a lever type transverse travel mode switch (not shown) is operated to actuate the front wheel turning means 30 or the rear wheel turning means 50.

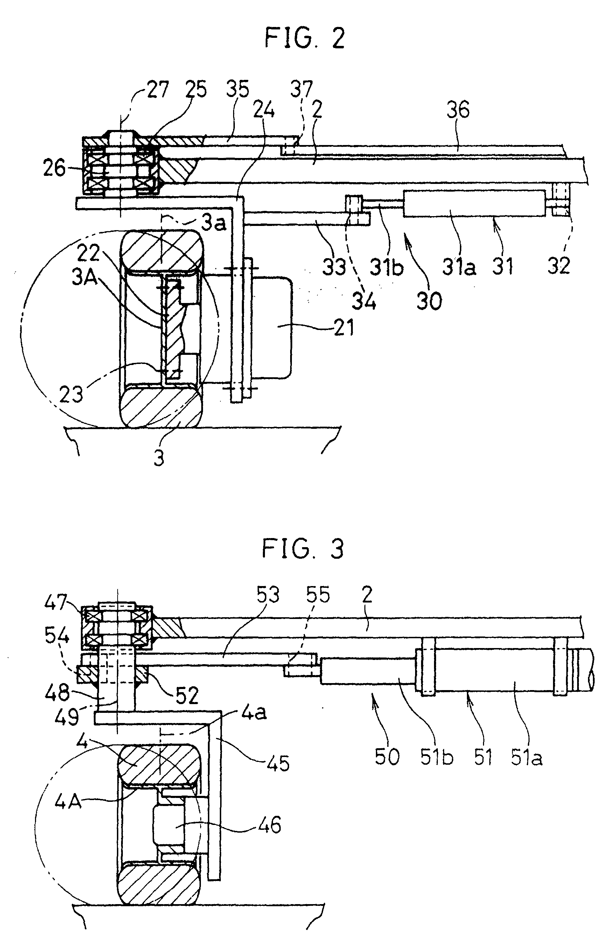

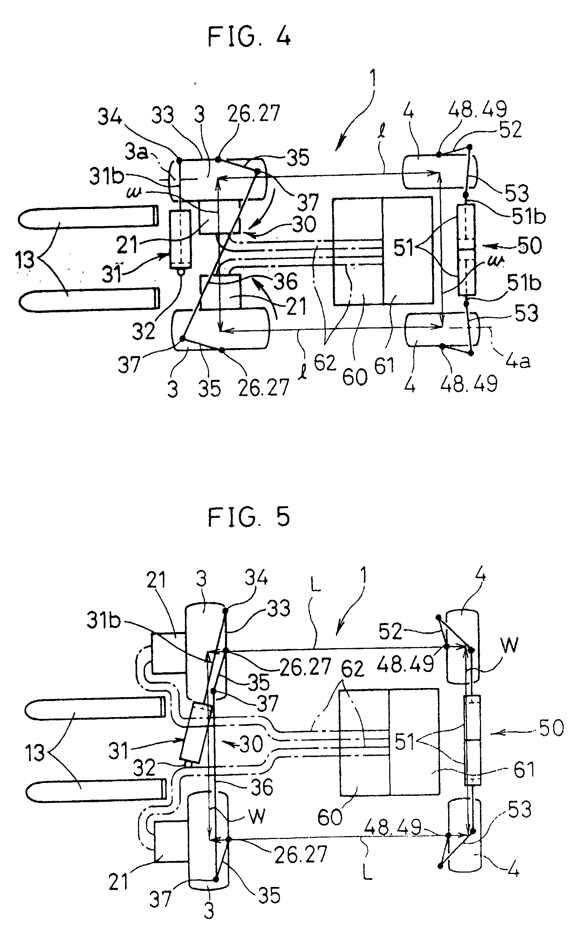

That is, in the front wheel turning means 30, tilting the lever causes the front wheel transverse travel cylinder 31 to extend, turning the revolving members 24 around the vertical axes 27 through the link 33; thus, as shown in phantom lines in FIGS. 1 and 2, and in FIG. 5, the front wheels 3 are turned (exactly sideways) by 90 degrees with respect to the vehicle body 2.

In this case, since the front wheels 3 are respectively integral with the electric motors 21, the 90-degree turning can be smoothly effected. Further, since the vertical axes 27 are each positioned outside the tread center 3a of the front wheel 3 during longitudinal travel, both front wheels 3 assume a state in which they are swung out transversely (the direction of the width of the vehicle, and the transverse travel direction) and forwardly (the direction of the length of the vehicle) with respect to the vehicle body 2.

Further, in the rear wheel turning means 50, one rear wheel transverse travel cylinder 51 is extended almost to its limit according to the turning angle of the steering wheel 16, while the other rear wheel transverse travel cylinder 51 is extended almost to its limit by electrically controlling the valve 58 by a transverse travel mode signal. Such extension of both rear wheel transverse travel cylinders 51 almost to their limit results in turning the vertical shafts 48 through the links 53 and arm bodies 52; thus, as shown in phantom lines in FIGS. 1 and 3, and in FIG. 5, it is possible to turn both rear wheels 4 around the vertical axes 49 through the revolving members 45, turning them (exactly sideways) by 90 degrees with respect to the vehicle body 2.

In this case, since the vertical axes 49 are each positioned outside the tread center 4a of the rear wheel 4 during longitudinal travel, both rear wheels 4 assume a state in which they are swung out transversely and rearwardly with respect to the vehicle body 2.

The fact that the front wheels 3 and rear wheels 4 are turned in this manner, that is, the fact that the front wheels 3 and rear wheels 4 are turned exactly sideways, is detected by the sensor to turn on an indicator lamp, thereby making the transverse travel mode possible. Therefore, controlling the electric power of the battery 60 by the controller 61 and then feeding the electric power to the individual electric motors 21 through the cable 62, makes it possible to drive the front wheels 3 forward and backward; thus, the forklift 1 can be transversely moved to the right or left. In this case, the pair of right and left rear wheels 4 are concomitantly rotated.

The transverse travel can be effected in this manner. At this time, both front wheels 3 are swung out transversely and forwardly with respect to the vehicle body 2, and both rear wheels 4 are swung out transversely and rearwardly with respect to the vehicle body 2, as described above, whereby, as shown in FIG. 5, the transverse wheel center distance W of the front wheels 3 is longer than the transverse wheel center distance w for the longitudinal travel (FIG. 4), that is, W>w. Further, the longitudinal wheel center distance L between the front and rear wheels 3 and 4 is longer than the longitudinal wheel center distance 1 for the longitudinal travel (FIG. 4), that is, L > 1.

Thereby, the transverse travel of the forklift 1 to the right and left is effected with stability; thus, the transfer of a long-sized object, for example, can be easily effected through the forks 13.

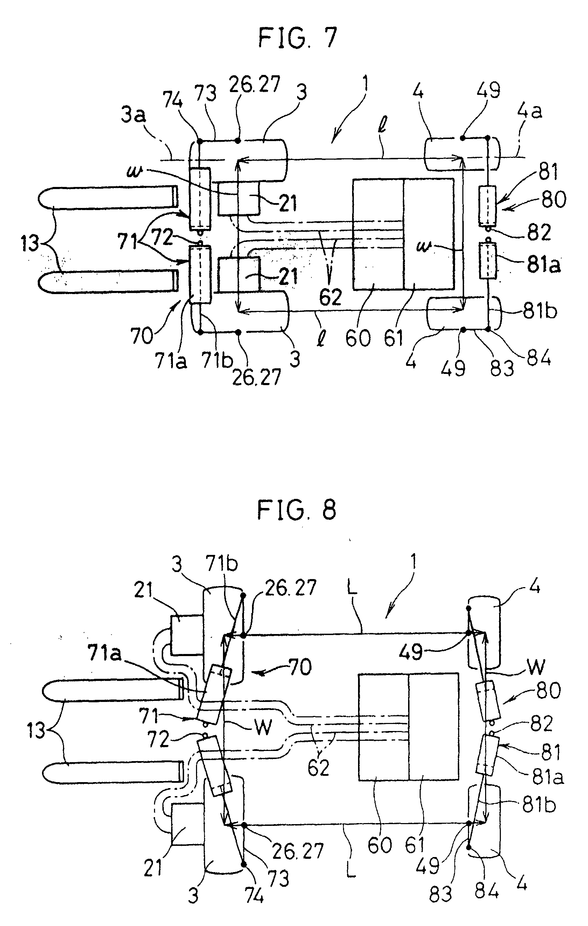

Next, a second embodiment of the invention will now be described with reference to FIGS. 7 and 8.

This second embodiment differs in the arrangement of the front wheel turning means 70 and the rear wheel turning means 80. That is, the front wheel turning means 70 comprises front wheel transverse travel cylinders 71 corresponding to the individual front wheels 3. Each front wheel transverse travel cylinder 71 is swingably attached at its main body 71a to the vehicle body 2 by a vertical pin 72, with its piston rod 71b relatively turnably connected through a vertical connecting pin 74 to a link 73 fixed to the revolving member 24.

Therefore, the actuation of the front wheel transverse travel cylinders 71 makes it possible to turn the revolving members 24 through the links 73, thereby turning each front wheel 3 exactly sideways around the vertical axis 27. That is, the front wheel turning means 70 is arranged so that the actuation of the front wheel transverse travel cylinders 71 causes the right and left front wheels 3 to turn in mutually opposite directions to face exactly sideways.

Further, the rear wheel turning means 80 is likewise arranged, comprising rear wheel transverse travel cylinders 81 corresponding to the rear wheels 4. Each rear wheel transverse travel cylinder 81 is swingably attached at its main body 81a to the vehicle body 2 by a vertical pin 82, with its piston rod 81b relatively turnably connected through a vertical connecting pin 84 to a link 83 fixed to the revolving member 45.

Therefore, the actuation of the rear wheel transverse travel cylinders 81 makes it possible to turn the revolving members 45 through the links 83, thereby turning each rear wheel 4 exactly sideways around the vertical axis 49. That is, the rear wheel turning means 80 is arranged so that the actuation of the rear wheel transverse travel cylinders 81 causes the right and left rear wheels 4 to turn in mutually opposite directions to face exactly sideways.

In the two embodiments described above, it is arranged that in positioning the vertical axes 27 and 49 outside the tread centers 3a and 4a of the front and rear wheels 3 and 4 for the longitudinal travel, they are positioned, for example, on the outer side surfaces of the front and rear wheels 3 and 4; however, it may be so arranged that they are positioned between the tread centers 3a and 4a and the outer side surfaces or positioned further outside the outer side surfaces.

In the two embodiments described above, electric motors 21 have been employed as travel drive means for moving the forklift 1; however, the type may be such that hydraulic motors are employed instead of electric motors 21. In this case, the vehicle body 2 is provided with an engine and a pair of hydraulic pumps driven by the engine. And, it is arranged that corresponding hydraulic pumps and hydraulic motors are connected by pipes so that one hydraulic motor may be associated with one hydraulic pump, that is, a 2-pump 2-motor type hydraulic driving system (HST system) may be formed. In addition, such 2-pump 2-motor type hydraulic driving system may be changed into a 1-pump 2-motor type hydraulic driving system.

In the two embodiments described above, the travel drive means is provided on the front wheel 3 side; however, the type may be such that the travel drive means is provided on the rear wheel 4 side.

In the two embodiments described above, a counter type forklift 1 is shown as a working vehicle; however, the same function may be obtained even if the working vehicle is a large-sized carrying vehicle, loader, side forklift or the like.

## Claims

1. A working vehicle with a transverse travel system, comprising a vehicle body provided with a pair of right and left front wheels and a pair of right and left rear wheels, each pair being turnable through 90 degrees, the pair of right and left front wheels being turnable around vertical axes with respect to the vehicle body and provided with a front wheel turning means for turning movement, the pair of right and left rear wheels being turnable around vertical axes with respect to the vehicle body and provided with a rear wheel turning means for turning movement, the vertical axes for the front and rear wheels being positioned outside a tread center of each wheel associated with a longitudinal travel position of each wheel.
